# EUROPÄISCHE PATENTSCHRIFT

(11) **EP 1 647 375 B1**
(45) Veröffentlichungstag und Bekanntmachung des Hinweises auf die Patenterteilung: **28.01.2009**
(21) Anmeldenummer: 05022196.9
(22) Anmeldetag: 12.10.2005
(51) Int. Cl.: B26D 3/06

(54) **Vorrichtung zum Einbringen von Oberflächenkanälen in plattenförmige Werkstücke**
Apparatus for grooving planar workpieces
Dispositif pour rainurer des pièces planes

(30) Priorität: 18.10.2004 DE 102004050635
(43) Veröffentlichungstag der Anmeldung: 19.04.2006
(73) Patentinhaber: C. & E. Fein GmbH, 73529 Schwäbisch-Gmünd-Bargau (DE)
(72) Erfinder: Bauhuber, August, 94060 Pocking (DE)
(74) Vertreter: Gahlert, Stefan

(56) Entgegenhaltungen:
- WO-A-92/03263
- DE-A1- 19 613 537
- DE-U1- 29 915 578
- US-A- 3 086 288
- US-A- 4 984 615
- US-A- 5 231 910
- PATENT ABSTRACTS OF JAPAN Bd. 018, Nr. 289 (M-1614), 2. Juni 1994 (1994-06-02) & JP 06 055491 A (HASHITANI SEISAKUSHO:KK), 1. März 1994 (1994-03-01)

## Beschreibung

Die Erfindung betrifft ein Werkzeug zum Einbringen von Oberflächenkanälen in plattenförmige Werkstücke, wie etwa Platten aus Hartschaum, Mineralfasern oder Styrol-Polymerisat, mit einem Befestigungsabschnitt, an dem eine Werkzeugaufnahme vorgesehen ist, mit einem Führungsabschnitt zur Führung entlang einer Oberfläche des Werkstücks und mit einem von dem Führungsabschnitt abstehenden Hohlmesser mit mindestens einer Schneidkante, wobei der Führungsabschnitt plattenförmig ausgebildet ist und starr mit einem ersten Ende und einem zweiten Ende des Hohlmessers verbunden ist.

Ein derartiges Werkzeug ist aus der DE 299 15 578 U1 bekannt. Bei dem bekannten Werkzeug handelt es sich allerdings um ein Handwerkzeug, mit dem sich Oberflächenkanäle in plattenförmige Werkstücke nur mit hohem Kraftaufwand einbringen lassen, wobei außerdem keine ausreichend hohe Präzision erreicht wird.

Ein weiteres Werkzeug ähnlicher Art ist aus der US 5 231 910 bekannt.

Hiernach können Oberflächenkanäle in Platten mittels eines oszillierend angetriebenen Schneidwerkzeuges angebracht werden, das einen Befestigungsabschnitt und einen daran gehaltenen Führungsabschnitt aufweist, wobei am Führungsabschnitt ein Hohlmesser mit einem etwa U-förmigen Querschnitt an einem Ende einstückig mit dem Führungsabschnitt verbunden ist.

Das oszillierend angetriebene Hohlmesser wird in einer Vorschubrichtung, die etwa tangential zur Antriebswelle des Oszillationsantriebes verläuft, durch die zu schneidende Platte hindurchgeführt, wodurch so der Oberflächenkanal ausgeschnitten wird. Dabei erfolgt eine Führung durch Anlage des Schneidmessers mit seinem Führungsabschnitt auf der Oberfläche der Platte.

Bei einer alternativen Ausführung des bekannten Schneidmessers sind im Führungsabschnitt zwei Ausnehmungen vorgesehen, durch die hindurch ein U-förmiges Schneidmesser mit seinen beiden Schenkeln eingesteckt werden kann und mit darin vorgesehenen Schlitzen unter Federwirkung an dem Führungsabschnitt fixiert werden kann.

Mit einem derartigen Werkzeug lassen sich zwar grundsätzlich Oberflächenkanäle in plattenförmige Werkstücke einbringen, jedoch hat es sich gezeigt, dass insbesondere dann, wenn die Platten aus relativ hartem Material, wie etwa Hartschaum, der ggf. noch mit einer Armierung versehen ist, bestehen, die bekannten Werkzeuge nicht ausreichend stabil sind, um den auf sie wirkenden Belastungen standzuhalten. Die bekannten Werkzeuge brechen somit in der Regel schon nach kürzester Benutzungszeit ab.

Aus der DE-A-196 13 537 ist ferner ein Werkzeug bekannt, das ein Befestigungsteil mit einer Befestigungsöffnung zur Befestigung an einer Antriebswelle eines Oszillationsantriebes aufweist, wobei am Befestigungsteil ein sich in Längsrichtung vom Befestigungsteil weg erstreckendes Schneidteil vorgesehen ist, mit einer tangential zur Oszillationsbewegung verlaufenden Schneide, wobei die Schneide in einer Ebene angeordnet ist, die zur Befestigungsteil-Ebene parallel nach unten versetzt ist und wobei die Schneide an der dem Befestigungsteil zu weisenden Seite des Schneidteils vorgesehen ist.

Mit einem derartigen Werkzeug lassen sich zwar Schnitte in plattenförmige Werkstücke mit Unterstützung eines Oszillationsantriebes einbringen, jedoch lassen sich tiefere Oberflächenkanäle kaum erzeugen, da das Werkzeug lediglich als Schälwerkzeug zum Abschälen von Kleberesten ausgebildet ist. Auch weist das betreffende Werkzeug für viele Einsatzfälle keine ausreichende Stabilität auf.

Der Erfindung liegt somit die Aufgabe zu Grunde, ein verbessertes Werkzeug sowie eine Vorrichtung zum Einbringen von Oberflächenkanälen in plattenförmige Werkstücke anzugeben, womit sich eine hohe Standfestigkeit beim Einbringen von Oberflächenkanälen unter Verwendung eines oszillierend angetriebenen Werkzeuges ergibt. Insbesondere soll auch eine Bearbeitung von Werkstücken aus relativ hartem bzw. zähem Material ermöglicht werden, ohne dass mit einem schnellen Abbrechen des Werkzeuges zu rechnen ist.

Diese Aufgabe wird erfindungsgemäß durch ein Werkzeug mit den Merkmalen des Anspruchs 1 gelöst.

Die Aufgabe der Erfindung wird auf diese Weise vollkommen gelöst.

Durch die plattenförmige Ausbildung des Führungsabschnittes in Verbindung mit einer starren Befestigung des Hohlmessers mit seinem ersten und zweiten Ende am Führungsabschnitt wird eine besonders hohe Stabilität des Werkzeuges gewährleistet. Mit Unterstützung eines Oszillationsantriebes kann mit großen Kräften auch an sehr hartem oder zähem Material gearbeitet werden, ohne dass mit einem schnellen Abbrechen des Werkzeuges gerechnet werden muss. Auch kann durch die starre Verbindung des Hohlmessers an seinem ersten und zweiten Ende mit dem plattenförmig ausgebildeten Führungsabschnitt das Werkzeug mit hoher Kraft in Vorschubrichtung bewegt werden. Durch die besondere Anordnung der Schneidkante in Bezug auf die Befestigungsöffnung ergibt sich ein gutes Schneidverhalten.

Ein erfindungsgemäßes Werkzeug eignet sich insbesondere auch zur Herstellung von Verlegekanälen in Hartschaum-Trägerplatten, wie sie für die Verlegung einer Fußbodenheizung mit geringer Aufbauhöhe und guter Wärmeübertragung notwendig sind.

Hiernach ist vorgesehen, den Verlegekanal für Heizrohre in einer Hartschaum-Trägerplatte mit einer Breite größer als der Durchmesser der darin zu verlegenden Heizrohre auszubilden und den Verlegekanal um eine Verlegungs-Mittellinie zu mäandern, d.h. in einer Schlangenlinie zu führen. Das in dem Verlegekanal verlegte Heizrohr kommt damit abwechselnd an gegenüberliegenden Seitenwänden des Verlegekanals zur Anlage, und es liegt im Übrigen frei innerhalb des Verlegekanals. Die Wärme kann damit ungehindert von dem wärmeisolierenden Hartschaum der Trägerplatte nach oben in den Fußboden abgeleitet werden. Der Freiraum um die Heizrohre wird hierbei zweckmäßig mit einer gut wärmeleitenden Spachtelmasse oder dergleichen verfüllt.

Als Hartschaum-Trägerplatte wird aus Stabilitätsgründen eine Trägerplatte bevorzugt, die auf der Plattenoberseite und der Plattenunterseite durch eine Armierung verstärkt ist. Diese Armierung ist ein Glasfasergewebe, das zwischen einer Kontaktmörtelschicht (zum Hartschaum hin) und einer Deckmörtelschicht aufgenommen ist. Eine solche Hartschaum-Trägerplatte ist unter der Bezeichnung Lux Elements® im Handel.

Der Verlegekanal für die Heizrohre hat vorzugsweise eine Breite von zumindest 110 bis 150 % des Durchmessers des zu verlegenden Heizrohres, und die Tiefe des Verlegekanals liegt vorteilhaft im Bereich von 100 bis 120 % des Durchmessers des Heizrohres. Mit Bezug zur Plattenoberseite ist der Verlegekanal zweckmäßig leicht unterschnitten, was das Verlegen des Heizrohres erleichtert, indem es bei Spannungen besser fixiert ist und nicht aus dem Verlegekanal herausspringen kann.

Vorteilhaft hat die Hartschaum-Trägerplatte auf ihrer Oberseite ein oder mehrere Gitterraster von z.H. zwischen 5 und 30 cm aufgedruckt, was das Einschneiden der Verlegekanäle wesentlich erleichtert.

Obwohl die Hartschaum-Trägerplatte grundsätzlich industriell mit eingeformtem Verlegekanal vorgefertigt werden kann, ist für die meisten Anwendungen eine individuelle Erzeugung der Verlegekanäle mit dem erfindungsgemäßen Werkzeug bevorzugt.

Das erfindungsgemäße Werkzeug besitzt ein Hohlmesser, das vorzugsweise in Form der Querschnittskontur des einzuschneidenden Verlegekanals ausgebildet ist, wobei das Hohlmesser an der Unterseite des als Gleitplatte ausgebildeten Führungsabschnittes zum Gleiten auf der Plattenoberseite beim Einschneiden des Kanals angeordnet ist. Die Werkzeugaufnahme dient zum Anschluss des Werkzeugs an einen handelsüblichen Oszillationsantrieb, der eine Abtriebswelle aufweist, die oszillierend um ihre Längsachse antreibbar ist. Die Schneidkante wird damit in eine Oszillier-Bewegung versetzt, wodurch sich diese durch den Hartschaum schneidet. Ein derartiger Oszillationsantrieb versetzt das Werkzeug in eine Drehoszillationsbewegung mit einer hohen Frequenz, die meist zwischen etwa 5.000 und 25.000 Oszillationen pro Minute liegt, sowie mit einem kleinen Verschwenkwinkel, der meist zwischen 0,5 und 5° liegt.

Die Amplitude der Oszillier-Bewegung muss dem Material der Trägerplatte angepasst sein. Das ausgeschnittene Material lässt sich anschließend leicht aus dem Kanal herausheben, wobei die Verschmutzung und die Staubentwicklung minimal sind.

Der Führungsabschnitt in Form der Gleitplatte lässt sich auf der Oberseite des zu bearbeitenden Werkstücks wie ein Schlitten bewegen, und das Hohlmesser wird dabei immer in Position zur Oberfläche des Werkstücks gehalten.

An der Vorderkante des Führungsabschnittes bzw. der Gleitplatte können Markierungen vorgesehen sein. Diese können etwa im Abstand der Amplitude des gewünschten Mäanderverlaufs bzw. des Ausschlages der Schlangenlinie angeordnet sein, um dem Bearbeiter anzuzeigen, innerhalb welcher Bereiche der schlangenlinienförmige Verlegekanal in die Trägerplatte einzuschneiden ist.

Für die Bearbeitung von Hartschaum-Trägerplatten mit einer Armierung auf der Plattenoberseite weist das Hohlmesser gemäß einer weiteren Ausgestaltung der Erfindung im Bereich benachbart des Führungsabschnittes gehärtete Schneiden bzw. Hartmetallschneiden auf, die die Möglichkeit haben, die Armierung und die harte Mörtelschicht zu zerstören, bevor die eigentliche Schneide für den Hartschaum zum Einsatz kommt.

Das Hohlmesser ist in vorteilhafter Weiterbildung der Erfindung stoffschlüssig mit dem Führungsabschnitt verbunden, wobei vorteilhaft das erste und zweite Ende des Hohlmessers mit dem Führungsabschnitt verschweißt sein können.

Hierdurch wird eine besonders beständige und dauerhafte Konstruktion des Werkszeugs gewährleistet, durch die eine Bruchgefahr auch bei längerem Arbeiten verringert wird.

Da das Hohlmesser vorzugsweise in Form der Querschnittskontur eines herzustellenden Oberflächenkanals ausgebildet ist, kann das Hohlmesser eine zumindest abschnittsweise gekrümmte oder lineare Schneidkante aufweisen, insbesondere eine annähernd teilkreisförmige, annähernd rechteckförmige oder annähernd V-förmige Schneidkante besitzen.

Gemäß einer weiteren Ausgestaltung der Erfindung weist der Führungsabschnitt eine Ausnehmung auf, durch die das Hohlmesser im Bereich seines ersten und zweiten Endes hindurchgeführt ist und auf der dem Hohlmesser abgewandten Seite des Führungsabschnittes befestigt ist.

Auf diese Weise kann eine vollständig ebene Fläche des Führungsabschnittes mit einer hohen Stabilität des Werkzeuges erzielt werden.

In alternativer Ausführung kann das Hohlmesser auf der ihm zugewandten Seite des Führungsabschnittes befestigt sein.

Auf diese Weise können Ausnehmungen in dem Führungsabschnitt vermieden werden, was zu einer besonders hohen Stabilität des Hohlmessers führt.

Gemäß einer weiteren Ausgestaltung der Erfindung ist die Schneidkante des Hohlmessers und/oder eine weitere Schneide, die dem Hohlmesser vorzugsweise in Vorschubrichtung vorgelagert ist, mit einer Verschleißschutzschicht beschichtet, die vorzugsweise Hartmetallpartikel, Diamantpartikel oder Borkarbid-Partikel enthält oder die in Metallspritztechnik ausgebildet ist.

Auf diese Weise kann eine noch höhere Standfestigkeit des erfindungsgemäßen Werkzeuges gewährleistet werden.

Gemäß einer weiteren Ausgestaltung der Erfindung ist die Werkzeugaufnahme als Befestigungsöffnung ausgebildet, die eine Längsachse definiert, um die das Werkzeug oszillierend antreibbar ist, wobei die mindestens eine Schneidkante eine Ebene aufspannt, deren Flächennormale radial zur Längsachse verläuft.

Bei einer derartigen Anordnung des Werkzeuges in Bezug auf den Oszillationsantrieb kann das Werkzeug mit Hilfe des Oszillationsantriebes praktisch durch die Oberfläche des zu bearbeitenden Werkstückes hindurchgeschoben werden, so dass besonders hohe Kräfte übertragen werden können. Dies ist insbesondere beim Bearbeiten von sehr harten oder zähen Materialien vorteilhaft.

Gemäß einer weiteren Ausführung der Erfindung ist die Werkzeugaufnahme als Befestigungsöffnung ausgebildet, die eine Längsachse definiert, um die das Werkzeug oszillierend antreibbar ist, wobei die mindestens eine Schneidkante eine Ebene aufspannt, deren Flächennormale parallel zu einer Tangente der Längsachse verläuft.

Bei dieser Ausführung wird das Werkzeug nicht durch das Werkstück hindurch "geschoben", sondern statt dessen mit Hilfe des Oszillationsantriebes durch das Werkstück hindurch "gezogen", um den Oberflächenkanal zu erzeugen. Hierbei wirkt sich die Oszillationsbewegung selbst vorteilhaft auf die Schneidwirkung aus, da die Oszillationsbewegung praktisch in Vorschubrichtung vor- und zurückgeht. So kann ein Werkstück teilweise mit geringerer Kraft als bei der ersten Variante der Erfindung bearbeitet werden.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: in perspektivischer Darstellung einen Ausschnitt einer Hartschaum-Trägerplatte mit eingearbeitetem Verlegekanal und eingelegtem Heizrohr einer Fußbodenheizung,
- Fig. 2: in perspektivischer schematischer Ansicht ein erfindungsgemäßes Werkzeug zum Einschneiden eines Verlegekanals in eine Hartschaum-Trägerplatte,
- Fig. 3: eine mögliche Querschnittskontur des Verlegekanals mit eingelegten Heizrohren unterschiedlichen Durchmessers,
- Fig. 4: eine perspektivische Ansicht einer weiteren Variante eines erfindungsgemäßen Werkzeuges,
- Fig. 5: eine Aufsicht des Werkzeuges gemäß Fig. 4,
- Fig. 6: eine Ansicht des Werkzeuges gemäß Fig. 5 von vorn,
- Fig. 7: eine Seitenansicht des Werkzeuges gemäß Fig. 6,
- Fig. 8: eine perspektivische Ansicht einer weiteren Variante eines erfindungsgemäßen Werkzeuges,
- Fig. 9: eine Aufsicht des Werkzeuges gemäß Fig. 8,
- Fig. 10: eine Vorderansicht des Werkzeuges gemäß Fig. 9,
- Fig. 11: eine Seitenansicht des Werkzeuges gemäß Fig. 10,
- Fig. 12: eine Teilansicht einer erfindungsgemäßen Vorrichtung mit einem auf die Abtriebswelle eines Oszillationsantriebes aufgesetzten Werkzeug, und
- Fig. 13: eine perspektivische Ansicht einer weiteren Abwandlung eines erfindungsgemäßen Werkzeuges.

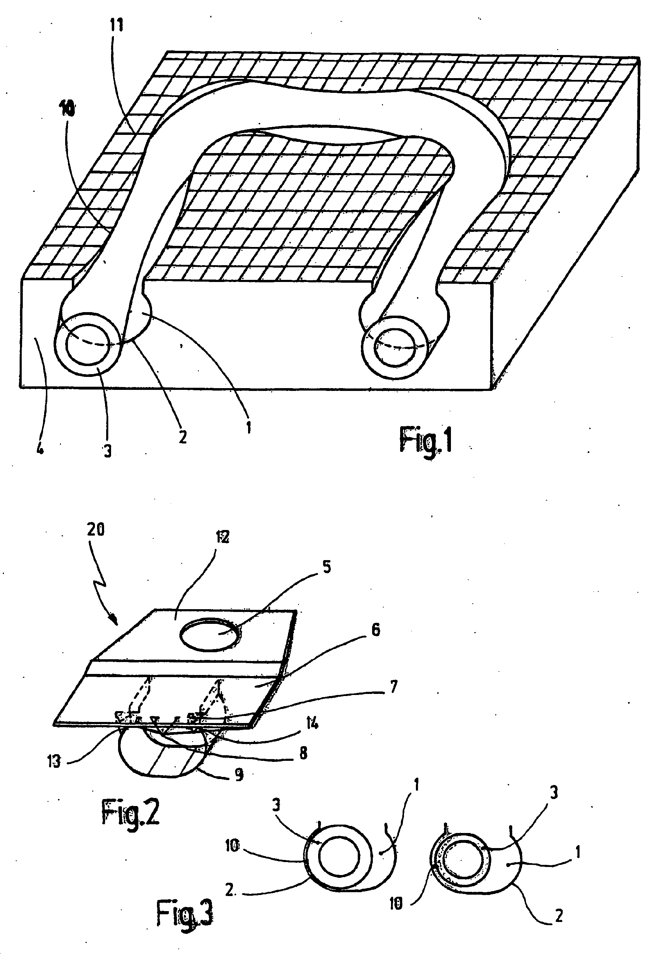

Eine in Fig. 1 dargestellte Trägerplatte 4, beispielsweise aus Polystyrol-Hartschaum, trägt auf ihrer Oberseite (nicht dargestellt, auch auf ihrer Unterseite) eine Armierung 11 aus Glasfasergewebe, das (nicht sichtbar) zwischen einer Kontaktmörtelschicht und einer Deckmörtelschicht eingebettet ist. In die Plattenoberseite ist durch die Armierung 11 hindurch ein zur Plattenoberseite hin offener Verlegekanal 1 für ein Heizrohr 3 eingearbeitet. Die Breite des Verlegekanals 1 ist größer als der Durchmesser des darin zu verlegenden Heizrohres 3. Der Verlegekanal 1 mäandert um eine gedachte oder auf der Plattenoberseite aufgezeichnete Verlegungs-Mittellinie, so dass das eingelegte Heizrohr 3 wechselnd an gegenüberliegenden Seitenwänden des Verlegekanals 1 in Klemmbereichen 10 zur Anlage kommt und ansonsten frei innerhalb des Verlegekanals 1 liegt. Wie dargestellt, ist die Querschnittskontur 2 des Verlegekanals 1 mit Bezug zur Plattenoberseite hinterschnitten, was die Verlegearbeit erleichtert.

Es bestehen nur kleine Kontaktpunkte zwischen Heizrohr 3 und Hartschaum-Trägerplatte 4. Der größte Teil des Heizrohres 3 ist von einem Freiraum umgeben. Dieser Freiraum wird mit einer gut wärmeleitenden Spachtelmasse (nicht dargestellt) aufgefüllt. Diese Spachtelmasse leitet die Wärme des Rohres nach oben, wodurch eine gute Wärmeableitung in den Fußboden erreicht wird. Die bisher bekannte Trägheit von Bodenheizungen (Aufheizzeit) trifft hier nicht zu. Es lässt sich eine sehr flinke Bodenheizung schaffen mit sehr kurzen Aufheizzeiten.

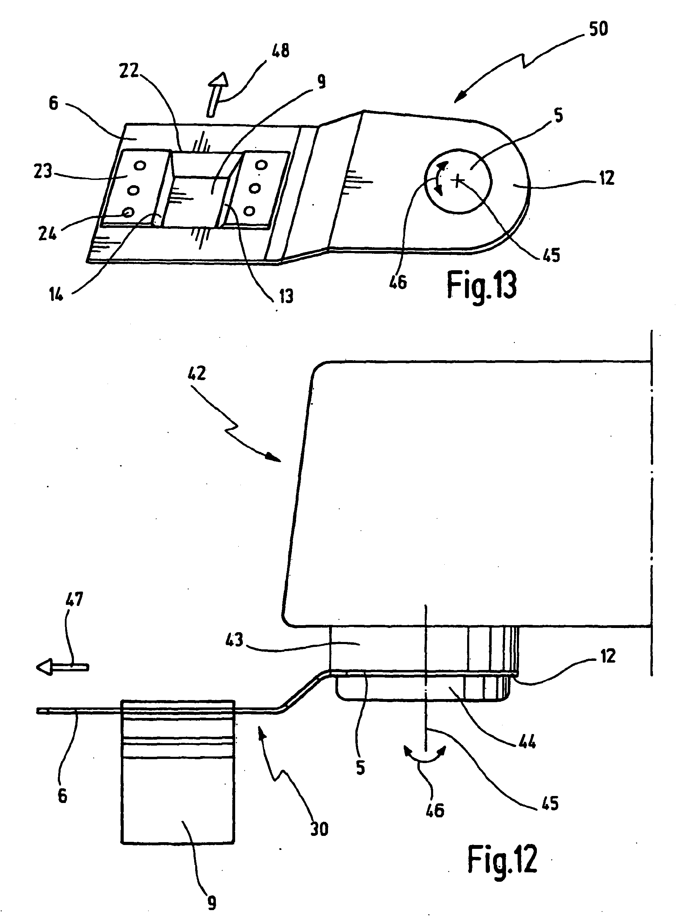

Fig. 2 zeigt eine erste Ausführung eines erfindungsgemäßen Werkzeuges 20 zum Einschneiden des Verlegekanals 1 in die Hartschaum-Trägerplatte 4. Das Werkzeug 20 weist einen Befestigungsabschnitt 12 mit einer Befestigungsöffnung 5 auf, der über eine Abkröpfung in einen Führungsabschnitt 6 übergeht, der als Gleitplatte ausgebildet ist. Auf der Unterseite des Führungsabschnittes bzw. der Gleitplatte 6 sitzt ein Hohlmesser 9 (Kanalschneider) in der Form der Querschnittskontur 2 des einzuschneidenden Verlegekanals. Das Hohlmesser 9 ist mit seinen beiden Enden 13, 14 starr an der Gleitplatte 6 befestigt, vorzugsweise damit verschweißt. Das Hohlmesser 9 besteht aus Edelstahl oder gehärtetem Metall und besitzt in Bereichen benachbart der Gleitplatte 6 jeweils eine zusätzliche Schneide oder einen Vorschneider 7 mit gehärteten bzw. Hartmetall-Schneiden zum Vorschneiden der Armierung 11 mit Mörtelschichten. Markierungen 8 an der Vorderkante der Gleitplatte 6 zeigen dem Benutzer die Amplitude bzw. den Ausschlag der Schlangenlinie des Verlegekanals 1 an. Mittels einer Werkzeugaufnahme 5 ist das Werkzeug an einen handelsüblichen elektrischen oder druckluftbetriebenen Oszillationsantrieb 42 montierbar (vgl. Fig. 12). Hierdurch wird das Werkzeug 20 in Oszillationsbewegungen um die Befestigungsöffnung 5 mit hoher Frequenz von etwa 5.000 bis 25.000 Hz und einem Verschwenkwinkel von etwa 0,5 bis 5° versetzt.

Das beschriebene Werkzeug gestattet es dem Benutzer, rationell Verlegekanäle in eine Hartschaum-Trägerplatte einzuschneiden, und es gibt dem Benutzer gestalterische Möglichkeiten. Ein Raum besteht aus Boden, Wand und Decke. Die Hartschaum-Trägerplatte wird in allen drei Ebenen verarbeitet, zusätzlich mit allerlei Einlagen in den Flächen. Es stellt kein Problem dar, mit Hilfe des Werkzeugs 20 in allen Bereichen von Boden, Wand, Decke und Sonderkonstruktionen eine Warmwasserheizung einzubauen. Eine Verflechtung der verschiedenen Bereiche ist möglich. Dadurch kann der Benutzer spontan auf Kundenwünsche eingehen und diese sofort umsetzen. Mittels des Werkzeugs 20 ist es auch möglich, in Abweichung vom Einsatzgebiet Heizung z.B. für Elektroinstallationen Verlegekanäle für Leerrohre von Elektroleitungen einzuschneiden - diese allerdings nicht in Schlangenlinie.

Das Verlegeverfahren nach der Erfindung wird nachfolgend am Beispiel der Sanierung und Neuverlegung eines Badezimmerbodens beschrieben.

Vorgaben: Alter Fliesenbelag auf altem Verbundestrich, Gesamtdicke des alten Aufbaus 4,5 cm.

Arbeitsablauf:
- Entfernung des alten Bodenaufbaus.
- Neuverlegung der in diesem Fall 3 cm dicken Hartschaum-Trägerplatte - damit ist auch ein Ausgleich des Bodens möglich. Bemerkung: je dicker die Hartschaum-Trägerplatte ist, umso größer wird der dämmende Bereich zwischen Unterkante Heizrohr und Plattenunterseite.
- In Absprache mit der Heizungsfirma wird der Verlauf der Heizrohre auf der Hartschaum-Trägerplatte aufgezeichnet. Beim Anschluss der Heizschlangen an den Heizkörper wird hierfür ein Stück Trägerplatte ausgespart und nach Verlegen der Rohre wieder eingesetzt.
- Mit dem Kanalschneider wird unter Zuhilfenahme der Markierungen in Schlangenlinien der Kanal für die Verlegung des Heizrohres ausgeschnitten. Nach dem Ausschneiden lässt sich der Schnittabfall aus dem Kanal heraushebeln.
- Nach dem Absaugen der leichten Verschmutzung wird das Heizrohr verlegt und angeschlossen.
- Die das Heizrohr umgebenden Freiräume werden mit Fließspachtelmasse ausgegossen.
- Auf die gesamte Fläche wird eine Armierung aufgebracht, die dabei verwendete Spachtelmasse kann etwas dicker aufgetragen werden, denn die dabei entstehende Masse ist bei der Wärmeübertragung von Heizrohr zu Fliese förderlich.
- Es könnte laut Herstellerangaben von Hartschaum-Trägerplatten jetzt der Fliesenbelag unmittelbar verlegt und verfugt werden. Alternativ kann zuvor eine Abdichtungsbahn mit Quer- und Längskanälen auf ihrer Unterseite wie eine Schlüter-Ditramatte® aufgebracht werden. Die offen bleibenden Kanäle unter dieser Abdichtungsbahn sind förderlich für die Wärmeverteilung.
- Nach Verlegung und Verfugung des Fliesenbelages kann die plastische Fuge erstellt werden.
- Gesamtdicke des neuen Aufbaus ist 4,5 cm.
- Der gesamte Ablauf ist ohne Wartezeiten durchführbar.

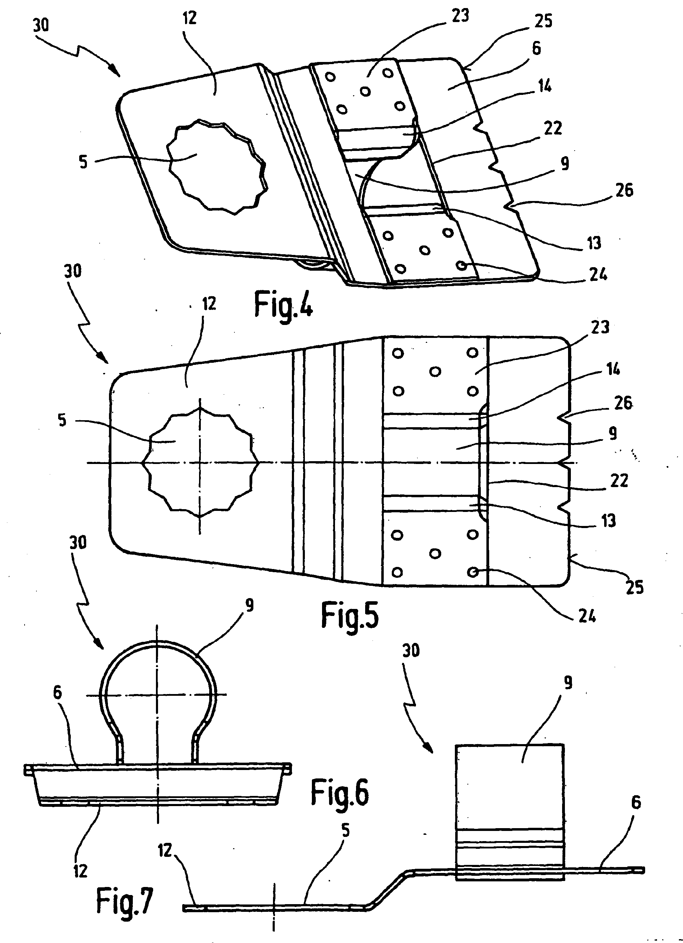

In den Fig. 4 bis 7 ist eine alternative Ausführung eines erfindungsgemäßen Werkzeuges dargestellt und insgesamt mit der Ziffer 30 bezeichnet.

Hierbei, wie auch bei den übrigen noch folgenden Figuren, werden für entsprechende Teile entsprechende Bezugsziffern verwendet.

Das Werkzeug 30 besteht wie das zuvor anhand von Fig. 2 erläuterte Werkzeug 20 aus einem Befestigungsabschnitt 12, aus einem über eine Abkröpfung mit dem Befestigungsabschnitt 12 verbundenen Führungsabschnitt 6 und einem daran aufgenommenen Hohlmesser 9.

Der Befestigungsabschnitt 12 weist eine annähernd trapezförmige, in Richtung zum Führungsabschnitt 6 etwas aufgeweitete Form mit abgerundeten Ecken auf. Zur Verbindung mit der Abtriebswelle eines Oszillationsantriebes dient die Werkzeugaufnahme 5 in Form einer Befestigungsöffnung. Die Werkzeugaufnahme 5 ist zur Herstellung eines Formschlusses mit der entsprechend geformten Abtriebswelle des Oszillationsantriebs 42 gemäß Fig. 12 in Form eines Vielkants ausgebildet.

Der Führungsabschnitt oder die Gleitplatte 6 weist eine etwa rechteckförmige Form auf, die über eine Verjüngung und die Abkröpfung in den Befestigungsabschnitt 12 übergeht. In der Mitte des plattenförmig ausgebildeten Führungsabschnittes 6 ist eine rechteckförmige Ausnehmung 22 ausgebildet, durch die das Hohlmesser 9 mit zwei Laschen 23 hindurchgeführt ist und auf beiden Seiten durch jeweils fünf Punktschweißungen 24 befestigt ist. So entsteht eine dauerhafte und feste Verbindung zwischen dem Hohlmesser 9 und dem Führungsabschnitt oder der Gleitplatte 6. Wie insbesondere aus Fig. 6 zu ersehen ist, steht das Hohlmesser 9 auf der den Laschen 23 gegenüberliegenden Seite des Führungsabschnitts von den beiden Enden 13, 14 aus nach außen hervor und besitzt eine etwa teilkreisförmige Schneide, deren beide Endabschnitte gerade in die Ausnehmung 22 hineinlaufen.

Es versteht sich, dass diese Form der Schneide 9 natürlich rein beispielhaft für eine von vielen möglichen Querschnittsformen ist, die mit dem Hohlmesser 9 erzeugt werden können, wie beispielsweise auch rechteckförmige oder V-förmige Querschnitte. V-förmige Querschnitte sind vorteilhaft, wenn Schnitte für Knicklinien für das Abknicken von Platten erzeugt werden sollen (z.B. bei der Verlegung von Boden zu Wand).

In Fig. 4 und 5 sind ferner an der der Befestigungsöffnung 5 gegenüberliegenden Vorderkante 25 des Führungsabschnittes 6 sind drei Markierungen, 26 in Form von Kerben erkennbar, die es dem Benutzer erleichtern, das Werkzeug 30 entlang einer vorgezeichneten Markierung zu führen.

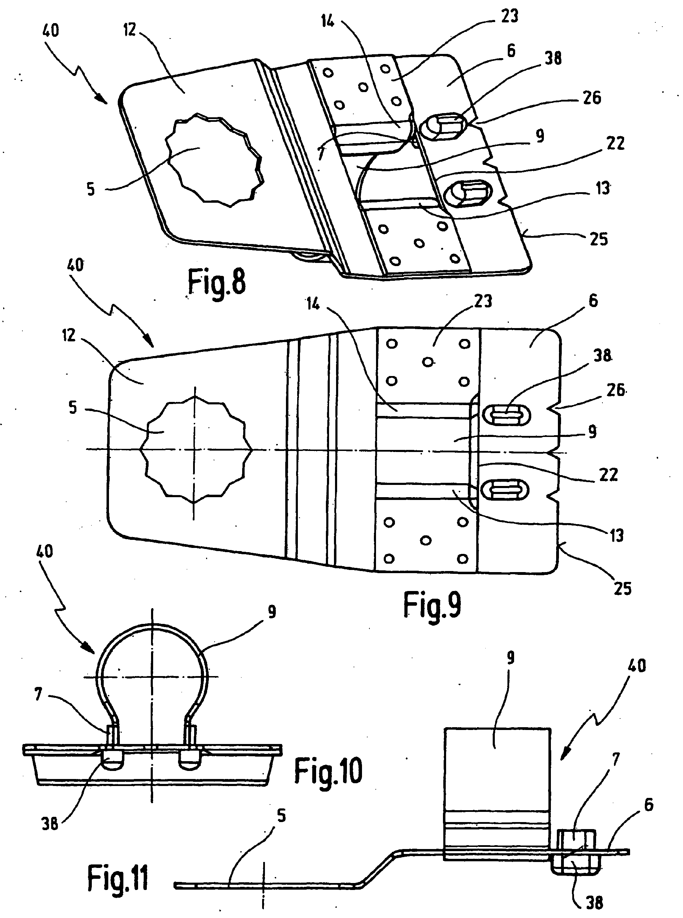

Eine Abwandlung des erfindungsgemäßen Werkzeuges ist in den Fig. 8 bis 11 dargestellt und insgesamt mit der Ziffer 40 bezeichnet.

Das Werkzeug 40 entspricht weitgehend dem zuvor anhand der Fig. 4 bis 7 beschriebenen Werkzeug 30. Der einzige Unterschied zum Werkzeug 30 besteht darin, dass zusätzlich am Führungsabschnitt 6 zwei Schneiden 7 aufgenommen sind, die als Vorschneiden für das Hohlmesser 9 dienen. Die Schneiden 7 sind dem Hohlmesser 9 in Bewegungsrichtung vorgelagert. Sie dienen zum Schutz des Hohlmessers 9 vor einem zu hohen Verschleiß und sind beispielsweise als Hartmetallschneiden ausgeführt. Die Schneiden 7 sind, wie insbesondere in Fig. 11 zu erkennen ist, in Ausnehmungen am Führungsabschnitt 6 verankert und auf der gegenüberliegenden Seite durch je einen Befestigungspunkt. 38 befestigt. Es handelt sich hierbei um eine Halterung mittels einer Presspassung oder einer Verschweißung.

Anhand von Fig. 12 wird im Folgenden erläutert, wie das erfindungsgemäße Werkzeug in Verbindung mit einem Oszillationsantrieb 42 verwendet werden kann, um Oberflächenkanäle in plattenförmige Werkstücke einzuschneiden.

In Fig. 12 ist ein Oszillationsantrieb handelsüblicher Bauart, der beispielsweise von der Anmelderin vertrieben wird, mit der Ziffer 42 bezeichnet. Der Oszillationsantrieb 42 weist eine Abtriebswelle 43 auf, an deren äußerem Ende ein Formschlussstück (nicht dargestellt) zur formschlüssigen Aufnahme des Werkzeuges 30 mit seiner Befestigungsöffnung 5 ausgebildet ist. Das Werkzeug 30 ist, wie in Fig. 12 gezeigt, mit seiner Befestigungsöffnung 5 auf das Formschlussstück aufgesetzt und von außen durch eine Mutter 44 gegen ein Lösen gesichert. Die Abtriebswelle 43 des Oszillationsantriebes 42 wird in Schwenkbewegungen um die Längsachse 45 der Abtriebswelle 43 versetzt, wie durch den Doppelpfeil 46 angedeutet ist. Die Oszillationen können beispielsweise mit einer Frequenz von 15.000 Oszillationen pro Minute und einem Verschwenkwinkel von etwa 0,5 bis 3° erfolgen. Hierdurch wird das Hohlmesser 9 des Werkzeugs 30 in Oszillationen versetzt, die etwa senkrecht zu seiner Schneide erfolgen. Das Werkzeug 30 kann nun in Vorschubrichtung 47 durch das Werkstück hindurchgeschoben werden, wobei die Vorschubkraft über den Oszillationsantrieb 42 unmittelbar auf das Hohlmesser 9 in Radialrichtung der Längsachse 45 übertragen wird.

Eine alternative Ausführung eines erfindungsgemäßen Werkzeugs ist in Fig. 13 dargestellt und insgesamt mit der Ziffer 50 bezeichnet.

Hierbei erfolgt die Befestigung des Werkzeugs 50 an seinem Befestigungsabschnitt 12 nicht wie bei der Ausführung gemäß Fig. 12 in einer gedachten Verlängerung mit der Vorschubrichtung 47, sondern es ist eine seitliche Aufnahme vorgesehen. Der Befestigungsabschnitt 12 weist wiederum eine Befestigungsöffnung 5 auf, die vorzugsweise mehrkantförmig ausgebildet ist, hier jedoch beispielhaft lediglich kreisförmig dargestellt ist. Das Hohlmesser 9 ist nun an der Ausnehmung 22 des Führungsabschnittes 6 gegenüber der Ausführung gemäß Fig. 12 um 90° verdreht aufgenommen, so dass die Schneide des Hohlmessers 9 zur Seite hin zeigt, wie in Fig. 13 zu erkennen ist. Es ergibt sich so eine Vorschubrichtung 48, die etwa parallel zu einer Tangente an die Längsachse 45 der Befestigungsöffnung 5 angeordnet ist, mit der das Werkzeug 50 an der Abtriebswelle 43 befestigt ist.

Bei dieser Anordnung erfolgen also die Oszillationen annähernd in Vorschubrichtung 48 vor- und zurückgehend, während bei der Ausführungsform gemäß Fig. 12 die Oszillationen senkrecht zur Vorschubrichtung 47 erfolgen.

Bei der Ausführungsform gemäß Fig. 13 wird das Werkzeug 50 also seitlich neben dem Hohlmesser 9 mit dem Oszillationsantrieb 42 gehalten und kann durch das Werkstück hindurchgeschoben oder -gezogen werden. Die Oszillationsbewegungen selbst tragen zur Schneidwirkung bei, da diese in Vorschubrichtung wirken und so den Schneidvorgang unterstützen. Allerdings ergibt sich hier in Abwandlung zu der Ausführung in Fig. 12 eine seitliche Hebelkraft, die vom Benutzer aufgefangen werden muss.

## Patentansprüche

1. Werkzeuge zum Einbringen von Oberflächenkanälen in plattenförmige Werkstücke (4), wie etwa Platten aus Hartschaum, Mineralfasern oder Styrol-Polymerisat, mit einem Befestigungsabschnitt (12), an dem eine Werkzeugaufnahme (5) vorgesehen ist, mit einem Führungsabschnitt (6) zur Führung entlang einer Oberfläche des Werkstücks (4) und mit einem von dem Führungsabschnitt (6) abstehenden Hohlmesser (9) mit mindestens einer Schneidkante, wobei der Führungeabschnitt (6) plattenförmig ausgebildet ist und starr mit einem ersten Ende (13) und einem zweiten Ende (14) des Hohlmessers (9) verbunden ist, wobei die Werkzeugaufnahme (5) als Befestigungsöffnung ausgebildet ist, die für eine Befestigung auf einer Antriebswelle (43) eines Oszillationsantriebes (42) ausgebildet ist, **dadurch gekennzeichnet, dass** das erste und zweite Ende des Hohlmessers (9) stoffschlüssig oder mittels einer Presspassung mit dem Führungsabschnitt (6) verbunden sind.

2. Werkzeug nach Anspruch 1, **dadurch gekennzeichnet, dass** das erste und zweite Ende (13, 14) des Hohlmessers (9) mit dem Führungsabschnitt (6) verschweißt sind.

3. Werkzeug nach einem der vorhergehenden Ansprüche, **dadurch gekennzeichnet, dass** das Hohlmesser (9) in Form der Querschnittskontur eines herzustellenden oberflächenkanals (1) ausgebildet ist.

4. Werkzeug nach Anspruch 2 oder 3, **dadurch gekennzeichnet, dass** das Hohlmesser (9) eine zumindest abschnittsweise gekrümmte oder lineare Schneidkante aufweist, insbesondere eine annähernd teilkreisförmige, annähernd rechteckförmige oder eine V-förmige Schneidkante aufweist.

5. Werkzeug nach einem der vorhergehenden Ansprüche, **dadurch gekennzeichnet, dass** der Führungsabschnitt (6) eine Vorderkante (25) aufweist, an der mindestens eine Markierung (26) vorgesehen ist.

6. Werkzeug nach einem der vorhergehenden Ansprüche, **dadurch gekennzeichnet, dass** der Führungsabschnitt (6) eine Ausnehmung (22) aufweist, durch die das Hohlmesser (9) im Bereich seines ersten und zweiten Endes hindurchgeführt ist und auf der dem Hohlmesser (9) abgewandten Seite des Frührungsabschnittes (6) befestigt ist.

7. Werkzeug nach einem der Ansprüche 1 bis 6, **dadurch gekennzeichnet, dass** das Hohlmesser (9) auf der ihm zugewandten Seite des Führungsabschnitts (6) befestigt ist.

8. Werkzeug nach Anspruch 7, **dadurch gekennzeichnet, dass** der Führungsabschnitt (6) als durchgehende Platte ohne Ausnehmung ausgebildet ist.

9. Werkzeug nach einem der vorhergehenden Anspruch, **dadurch gekennzeichnet, dass** am Führungsabschnitt (6) mindestens eine weitere Schneide (7), vorzugsweise eine Hartmetallschneide, gehalten ist, die vorzugsweise der Schneidkante des Hohlmessers (9) in Vorschubrichtung vorgelagert ist.

10. Werkzeug nach einem der vorhergehenden Ansprüche, **dadurch gekennzeichnet, dass** die Schneidkante und/oder die weitere Schneide (7) mit einer Verschleißschutzschicht beschichtet ist, die vorzugweise Hartmetallpartikel, Diamantpartikel oder Borkarbid-Partikel enthält oder die in Metallspritztechnik ausgebildet ist.

11. Vorrichtung zur Erzeugung von Oberflächenkanälen in plattenförmigen Werkstücken, wie etwa Platten aus Hartschaum, Mineralfasern oder Styrol-Polymerisat, mit einem Oszillationsantrieb (42), der eine Abtriebswelle (43) aufweist, die oszillierend um ihre Längsachse (45) antreibbar ist und an der ein Werkzeug (20, 30, 40, 50) nach einem der vorhergehenden Ansprüche aufgenommen ist.

## Claims

1. A tool for generating surface channels in plate-shaped workpieces (4), such as panels made of hard foam, mineral fibers or styrene polymer, comprising a fastening section (12) having a tool receptacle (5), further comprising a guiding section (6) for guiding the tool along a surface of the workpiece (4), and further comprising a hollow knife (9) protruding from the guiding section (6) and having at least one cutting edge, wherein the guiding section (6) is configured plate-shaped and is rigidly connected with a first end (13) and a second end (14) of the hollow knife (9), wherein the tool receptacle (5) is configured as a securing opening which is configured for securing on a drive shaft (43) of an oscillatory drive (42), **characterized in that** the first and second ends of the hollow knife (9) are firmly bonded or press-fit connected to the guiding section (6).

2. The tool of claim 1, **characterized in that** the first and second ends (13, 14) are welded to the guiding section (6).

3. The tool of any of the preceding claims, **characterized in that** the hollow knife (9) is configured in the shape of the cross-section of a surface channel (1) to be produced.

4. The tool of claim 2 or 3, **characterized in that** the hollow knife (9) comprises at least partially a bent or linear cutting edge, in particular a cutting edge of an approximately partially circular shape, of an approximately rectangular shape or of an approximately V-shape.

5. The tool of any of the preceding claims, **characterized in that** the guiding section (4) comprises a front edge (25) whereon at least one mark (26) is provided.

6. The tool of any of the preceding claims, **characterized in that** the guiding section (4) comprises a cutout (22) through which the hollow knife (9) is inserted within the region of its first and second ends and is secured to the guiding section (6) on the side opposite the hollow knife.

7. The tool of any of claims 1 to 6, **characterized in that** the hollow knife (9) is secured to the guiding section (6) on the side facing the guiding section (6).

8. The tool of claim 7, **characterized in that** the guding section (6) is configured as a continuous plate without any cutout.

9. The tool of any of the preceding claims, **characterized in that** at least one additional cutter (7), preferably a hard metal cutter, is secured to the guiding section (6) and is placed before the hollow knife (9) in feed direction.

10. The tool of any of the preceding claims, **characterized in that** the cutting edge and/or the additional cutter (7) is coated by a wear-resistant protective layer, preferably by a layer comprising hard metal particles, diamond particles, or boron carbide particles, or is configured in metal spraying technique.

11. A tool for generating surface channels in plate-shaped workpieces, such as panels made of hard foam, mineral fibers or styrene polymer, comprising an oscillatory drive (42) having a drive shaft (43) which can be driven oscillatingly about its longitudinal axis (4) and whereon a tool (20, 30, 40, 50) according to any of the preceding claims is received.

## Revendications

1. Outil pour mettre en place des canaux de surface dans des pièces (4) en forme de plaque telles que des plaques en mousse rigide, en fibres minérales ou en polymère de styrène, avec un tronçon de fixation (12), sur lequel est prévu un logement d'outil (5), avec un tronçon de guidage (6) pour le guidage le long d'une surface de la pièce (4) et avec une lame creuse (9) dépassant du tronçon de guidage (6) avec au moins une arête de coupe, le tronçon de guidage (6) étant réalisé en forme de plaque et étant relié de manière rigide à une première extrémité (13) et à une seconde extrémité (14) de la lame creuse (9), le logement d'outil (5) étant réalisé comme un orifice de fixation qui est réalisé pour une fixation sur un arbre d'entraînement (43) d'un entraînement à oscillations (42), **caractérisé en ce que** la première et la seconde extrémités de la lame creuse (9) sont assemblées par liaison de matière ou au moyen d'un ajustement serré avec le tronçon de guidage (6).

2. Outil selon la revendication 1, **caractérisé en ce que** la première et la seconde extrémités (13, 14) de la lame creuse (9) sont soudées au tronçon de guidage (6).

3. Outil selon l'une quelconque des revendications précédentes, **caractérisé en ce que** la lame creuse (9) est réalisée en forme de contour de section transversale d'un canal de surface (1) à fabriquer.

4. Outil selon la revendication 2 ou 3, **caractérisé en ce que** la lame creuse (9) présente une arête de coupe cintrée au moins par endroits ou linéaire, présente en particulier une arête de coupe approximativement en forme de cercle partiel, approximativement rectangulaire ou en forme de V.

5. Outil selon l'une quelconque des revendications précédentes, **caractérisé en ce que** le tronçon de guidage (6) présente une arête avant (25), sur laquelle est prévu au moins un marquage (26).

6. Outil selon l'une quelconque des revendications précédentes, **caractérisé en ce que** le tronçon de guidage (6) présente un évidement (22), au travers duquel est passée la lame creuse (9) dans la zone de ses première et seconde extrémités et est fixée sur le côté éloigné de la lame creuse (9) du tronçon de guidage (6).

7. Outil selon l'une quelconque des revendications 1 à 6, **caractérisé en ce que** la lame creuse (9) est fixée sur le côté tourné vers elle du tronçon de guidage (6).

8. Outil selon la revendication 7, **caractérisé en ce que** le tronçon de guidage (6) est réalisé comme une plaque continue sans évidement.

9. Outil selon l'une quelconque des revendications précédentes, **caractérisé en ce qu'**au moins une autre lame (7) de préférence une lame en métal dur est maintenue sur le tronçon de guidage (6), laquelle est logée de préférence en amont de l'arête de coupe de la lame creuse (9) dans le sens d'avancement.

10. Outil selon l'une quelconque des revendications précédentes, **caractérisé en ce que** l'arête de coupe et/ou l'autre lame (7) est revêtue d'une couche de protection contre l'usure qui contient de préférence des particules de métal dur, des particules de diamant ou des particules de carbure de bore ou qui est réalisée en utilisant la technique de métallisation au pistolet.

11. Dispositif de génération de canaux de surface dans des pièces en forme de plaque telles que des plaques en mousse rigide, en fibres minérales ou en polymère de styrène, avec un entraînement à oscillations (42) qui présente un arbre de sortie (43) qui peut être entraîné de manière oscillante autour de son axe longitudinal (45) et sur lequel est logé un outil (20, 30, 40, 50) selon l'une quelconque des revendications précédentes.
